# EUROPEAN PATENT APPLICATION

(11) **EP 1 256 893 A2**
(43) Date of publication of application: **13.11.2002**
(21) Application number: 02252633.9
(22) Date of filing: 15.04.2002
(51) Int. Cl.: G06F 17/60, G06F 17/30

(54) **System and method using a three-layer architecture for auditing the stock of a retail or warehouse establishment**

(30) Priority: 13.04.2001 US 283374 P
(71) Applicant: Moore Corporation Limited, Stamford, Connecticut 06901 (US)
(72) Inventor: Wainright, Rob, c/o Moore Corporation Limited, Stamford, Connecticut 06901 (US)
(74) Representative: Townsend, Victoria Jayne

(57) **Abstract**

A stock auditing system (50) includes a three-tiered, independent-component architecture (102, 104, 106) to provide extensibility and compatibility with mainstream personal computer operating systems. The system (50) provides a robust and stable operating environment with quick and flexible data manipulation through relational database technology. Reporting capability can be user defined. Object oriented business rules are provided for easier extensions to software functionality. Inherent design standards allow natural language variations. Full on-line contextual user help screens are also provided.

## Description

### FIELD OF THE INVENTION

This invention relates to retail and other stock auditing systems, and more particularly to a new retail stock audit software architecture that is extensible and adaptable to mainstream operating systems.

### BACKGROUND AND SUMMARY OF THE INVENTION

Retailers and others often have difficulty managing their stock and inventory. Store owners have trouble knowing precisely how much stock is on their shelves or in their back room or warehouse. Having too much stock increases costs and reduces efficiency. Not enough stock causes lost sales opportunities. It is useful for retailers and other entities concerned with stock management to know precisely how many units of each particular product is on store shelves, how many units are in the back room or warehouse, and how many units are on order.

Stock management and auditing used to be done manually. However, with the availability of automation tools and inexpensive computer systems, retail stock management and auditing functions have increasingly become more automated. Many retailers now have sophisticated automated stock auditing capabilities, but some of these systems have problems. For example, many such systems run on an older computer (e.g., a mini computer or mainframe) that is costly to maintain. Additionally, many such systems are labor-intensive to operate and unable to cope with large auditing tasks -- causing system crashes and requiring substantially technology support. Even more importantly, such older systems may not provide sufficient integrity in the stock auditing process. Oftentimes, a large retailer or warehouse will schedule a periodic stock auditing period to audit the stock levels of their entire inventory. However, it is undesirable for the retailer or warehouse to shut down its operations during this time -- which means that stock is arriving and leaving during the stock auditing period as customers place new orders and purchases. It is difficult and yet important to accurately audit stock in such a "moving target" scenario.

Stock data capture efficiency is one of the more important aspects of accurate and efficient stock auditing. In 1994, Peak Technologies (UK) Ltd. began offering a retail stock audit software solution that has been successful in generating profitable income and market demand. Called the Nucleus Stock Audit system, this arrangement is more than just software: it's a complete retail solution built around bar code-based data capture technologies. Generally, the system operates by downloading a retailer's current or expected inventory information from the host or in-store computer into a Nucleus Stock Audit software application. Once this data is downloaded, Nucleus Stock Audit automatically generates an extract file. This file, containing all of the prices, UPC codes and descriptions, is downloaded onto a portable data capture terminal. The portable terminal is then ready to scan, capture and verify store line merchandise data. While the data is being captured and verified, the user is able to periodically download the information into the Nucleus Stock Audit application for analysis. At this point, reconciliation of the scanned data with the expected stock instantly takes place on-site to identify discrepancies that need further investigation.

Advantages of this type of system include:
- Increased accuracy
- Verifies the product instantly at the point of data capture
- Eliminates rejected unknown SKU's at the host computer
- Furnishes on-demand analysis of scanned vs. host-expected stock
- Generates an instant result available for immediate investigation
- Incorporates double-check and re-count options
- Ensures confidence in data accuracy
- Includes tracking and accounting of in-transit merchandise
- Provides an accurate cut-off prior to comparison
- Features audit trail reporting throughout the inventory process
- Records changes initiated by the auditor with user definable reason codes
- Provides comprehensive Home Office Summary Reporting
- Generates a separate audit report for managerial analysis
- Versatility
- Offers implementation flexibility to meet your requirements and budget
- Spans from basic data capture to detailed inventory analysis
- Evolves to address new requirements
- Allows you to meet and exceed changing market demands
- Features drill down reporting functionality to multiple levels of inquiry
- Delivers SKU, product group, department and summary analysis reports
- Reports gains, losses and SKU accuracies down to line/detail item level
- Gives detailed visibility of the powerful information hidden in net summaries
- Provides total audit accountability of the physical count process
- Eliminates opportunities for misuse through secure structured procedures
- Configures multiple selections in different languages, currencies and data formats
- Enables a company to compete on an international level
- Ready-to-Use
- Simple-to-learn design reduces time spent training your employees
- Involves your store staff in the ownership of the result
- Incorporates portable plug-and-play functionality
- Allows the system to be in constant use throughout the year
- Runs on industry standard Windows® PC
- Utilizes intuitive point-and-click functionality
- Runs on easily configured standard application
- Ensures performance and future compatibility

While the Nucleus Stock Audit system marketed by Peak Technologies has been highly successful, further improvements are possible and desirable.

A long term process such as stock auditing presents a significant challenge in terms of adapting to changing conditions. A business commits a significant amount of resources and trust when it chooses a vendor for software controlling or keeping track a core business function such as stock auditing and other such needs. For example, once a stock auditing database is created and populated, it is generally very difficult to change to a different system. Therefore, the developer of such software must be able to flexibly adapt to changing conditions requiring corresponding changes in the behavior and operation of the software. Such changing conditions may be due to a number of different factors, including but not limited to:
- computing hardware changes,
- business rule changes,
- availability of new or enhanced functionality input devices such as portable wireless terminals,
- particular customization requirements of specific customers,
- need for additional or enhanced functionality in response to competition, other compatible applications, etc.,
- other factors.

For example, as personal computer operating systems and hardware have become increasingly capable and less expensive, it has become desirable to adapt the stock audit application technology platform so that it supports various mainstream personal computer operating systems. In addition, it would be desirable to provide a technology platform architecture that allows efficient extensions and updates. Such an extensible, undatable architecture would be useful, for example, to create different language (localized) versions of the software in order to develop new markets. Additionally, the ability of the system to accept "plug in" type modules from different vendors as well as updated modules would offer additional flexibility, versatility and maintainability.

Exemplary non-limiting embodiments of the present invention solve these and other problems by providing an enhanced, extensible stock audit technology platform including the following non-limiting features and advantages:
- improved three-tier architecture,
- more robust and stable operating environment,
- quicker and more flexible data manipulation through relational database technology,
- user-defined reporting capability,
- object oriented (OO) business rules for more easily extending software functionality,
- inherent design standards to allow national language variations,
- full on-line contextual user help screens,
- other features.

Briefly, in accordance with one aspect provided by an exemplary embodiment of the invention, an application providing a hardware and software solution to meet the stock auditing and other requirements of a number of different needs and markets (e.g., perpetual inventory) provides a unique three-tiered architecture. The architecture provided by an illustrative embodiment of the present invention embraces a three-tier, separate-component approach, and is built on standard personal computer or other operating system technologies. In one exemplary embodiment, the three tiers comprise:
- services layer,
- business layer, and
- applications layer.

The services tier or layer in the exemplary illustrative embodiment includes a relational database containing all of the information that is received from a customer's host computer or is otherwise developed (e.g., through use of wireless portable terminals). This relational database may be based, for example, on a SQL Server database model. Information that is received from outside of the application may also be persisted within this database.

In the exemplary embodiment, sitting "on top of" the services layer are a plurality of objects that provide user interface-less services for the application programmer. This layer may be known as the Business Objects layer. In the exemplary embodiment, the Business Objects layer can communicate with hand-held terminal(s) and host computer(s), and provides "sanitized" access to the underlying database for the user interface.

The exemplary non-limiting architecture also provides a user interface application which uses the Business Objects to provide a user interface allowing users to interact with the application. For example, Microsoft's Interface Definition Language may be used to provide a complete interface between the user interface application and the Business Objects. A number of screens may be displayed giving different views on the stock related data. A standard report generator may be used to generate a series of reports on demand. A conventional communications package may be used to allow fast communication between the hand-held terminal's and the personal or other computer.

By dividing the functionality of the overall system into three layers comprising modules and minimizing the dependency between the modules, the resulting system provides excellent extensibility and updatability. For example, it becomes possible to easily install additional or replacement modules to provide enhanced, different or customized functionality.

The three-layer architecture of the exemplary embodiment also facilitates localization. In particular, in the exemplary embodiment the user interface is supplied by only one of the layers. Further, the software is designed so that user interface texts are supplied via files rather than being interspersed throughout the code. This means that translating the software for use by different native language speakers can be accomplished easily and efficiently by simply translating the text files using any standard translation or localization process.

### BRIEF DESCRIPTION OF THE DRAWINGS

These and other features and advantages may be better and more completely understood by referring to the following detailed description of presently preferred example embodiments in conjunction with the drawings, of which:
Figure 1 schematically illustrates an example preferred embodiment automated retail and other stock audit system;
Figure 2 shows an example stock audit system software architecture;
Figure 3 shows an example stock audit module architecture;
Figure 4 shows an example diagram detailing exemplary components within an example stock audit manager;
Figure 5 shows example communication couplings between the various components within the exemplary architecture;
Figure 6 illustrates the software involved with batch communications and the protocols used between the various pieces of software in the illustrative embodiment;
Figure 7 illustrates the software involved with the RF communications and the protocols used between the various parts of the software in the illustrative embodiment;
Figure 8 shows an example process for initializing and logging in to the exemplary stock audit module;
Figure 9 shows an example process for terminating a session with the exemplary stock audit module;
Figure 10 shows an example process for loading expected data for a stock audit; and
Figure 11 shows an example reconciliation process.

### DETAILED DESCRIPTION OF THE INVENTION

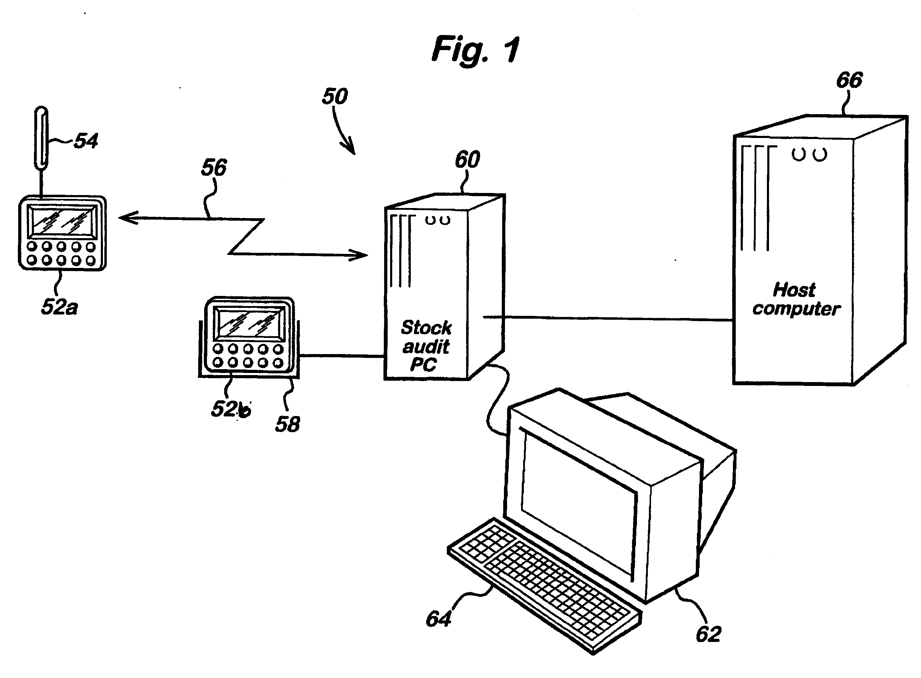

Figure 1 shows an example stock auditing system 50 provided by a preferred exemplary non-limiting embodiment of the present invention. In this example stock auditing system 50, hand-held terminals 52 are used to gather information about stock on retail store shelves, warehouse shelves, etc. For example, each hand-held terminal 52 may include a barcode scanner 54 that an operator uses to read an encoded universal product code (SKU) printed on the packaging of stocked products.

The hand-held terminals 52 communicate either continually (e.g., via an RF link 56) or intermittently (e.g., via a cradle 58) with a stock auditing computer system 60. Computer system 60 may include a conventional personal computer with display monitor 62 and keyboard 64 as well as a variety of other conventional peripherals (not shown). In one example embodiment, personal computer 60 communicates with a retail host computer 66 that includes, for example, stock database information.

In the exemplary embodiment, the stock audit computer system 60 runs software that interacts with the hand-held terminals 52. For example, computer system 60 may download information into the hand-held terminals 52, and it may receive information from the hand-held terminals. The stock audit computer system 60 provides an integrated, enterprise-wide stock audit management function to assist a retailer in auditing the stock of his or her retail operation.

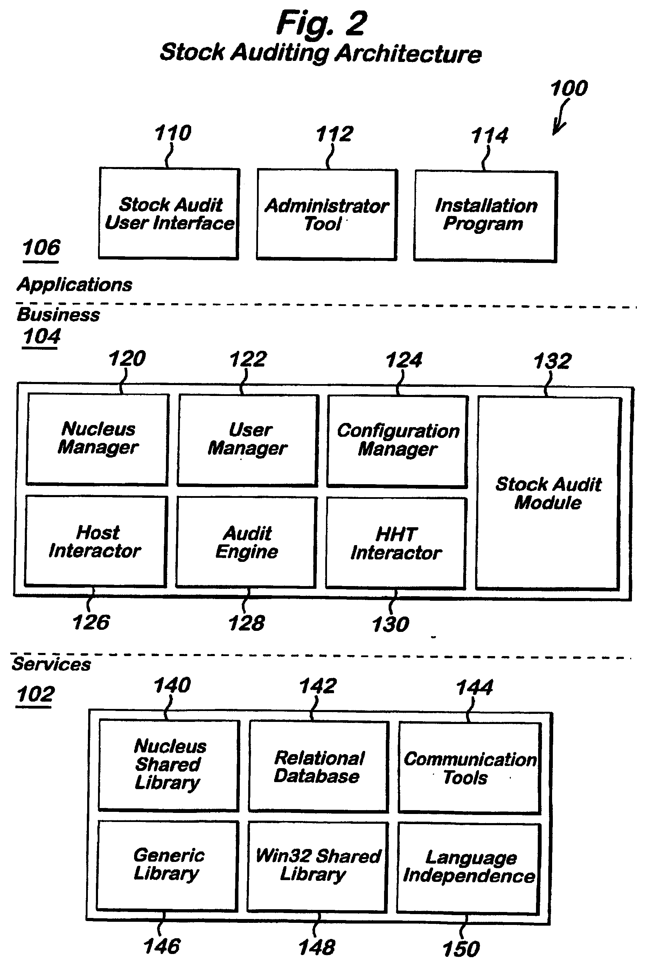

In the exemplary embodiment, stock audit computer system 60 may be a conventional personal computer including a Microsoft Windows-based operating system. Additionally, computer 60 includes specialized stock audit software having an architecture as shown in Figure 2. The stock auditing architecture 100 of Figure 2 in conjunction with the computer 60's hardware and conventional operating system provides an integrated stock auditing system that maintains a database of current stock, receives updates on stock and orders from host computer 66 and/or hand-held terminals 52, and provides views and reports on demand.

Figure 2 is a block diagram showing an example stock auditing system software architecture 100. The system shown in Figure 2 is designed with the overall goals of being able to handle change efficiently and to be extensible. All of the illustrated components are generic in the illustrative embodiment, and are not limited to (e.g., as designed to be generic of) the distinct data capture solutions that are built upon the base system (this allows a variety of different data capture solutions to be used). In the example embodiment, the architecture 100 may be embodied within software and/or hardware running on personal computer 60 shown in Figure 1.

As can be seen from Figure 2, the preferred embodiment architecture 100 includes three basic layers:
- a services layer 102,
- a business layer 104,
- an applications layer 106.

The services layer 102 consists of a set of modules that provide functionality to the business layer 104 (and potentially other services) to perform required tasks. In the exemplary embodiment, the functionality provided by the services layer 102 includes a relational database such as an SQL or other database server or application that keeps track of stock and other persistent information.

The business layer 104 consists of a series of executable components that deliver the data capture functionality to the applications layer 106 components. All business logic and security checks are enforced by these components within the business layer 104 in the illustrative embodiment. In the illustrative embodiment, the exposed interfaces and methods are all automation-friendly. There are no user interface components within the business layer 104 in the example embodiment - the user interface being provided by the application layer 106 instead. The underlying tools (e.g., databases) are preferably completely hidden by objects within the business layer 104. This has the advantage that all client programmers (e.g., the user interface writer) can program in business terms (e.g., expected counts, count summaries, etc.) without having to be concerned with underlying database structures and details. Although every database structure is not exposed above the business layer 104, some results are passed back (e.g., using ADO) to allow user manipulation of the data.

The application layer 106 in the illustrative embodiment consists of a series of user interfaces that are tailored for particular customer requirements. By design, the application layer 106 contains mainly code needed to drive the behavior and look and feel of the user interface. These applications also contain code and functionality that use components provided by the business layer 104 to perform data capture operations and to view the results. In the illustrative embodiment, the user interfaces are written in a variety of programming languages and tools. One example programming language that may be used conveniently is Visual Basic.

The applications layer 106 components are built on top of a published set of components and their interfaces and methods (i.e., the business layer 104). In the longer term, the separation of the applications layer 106 from the business layer 104 allows the Figure 2 architecture 100 to be used by any number of reference applications (e.g., including those written by third party vendors or an Internet based solution) without requiring changes to the main code. By splitting the overall architecture 100 into three layers, changes can be performed far more easily and the architecture 100 is much more extensible.

The overall architectural design of a software system significantly impacts how easily it can be updated or changed. There are various approaches to designing software applications. For example, single tier architectures generally consist of a single executable written in one language where the user interface contains both the business code and the underlying database code. An advantage of single-tier architectures is that they are potentially the quickest to implement (i.e., assuming the implementation language is able to handle different types of code). However, they tend to react poorly to change because the user interface code and the supporting rules are typically coupled tightly together. Peak Technologies' prior Nucleus Stock Audit offering is an example of a single-tiered application.

A two-tier architecture generally may split the database code away from the code implementing the user interface and business rules. Such two-tier architectures are popular with small-scale applications and are easy to create. On the Windows platform, for example, they are almost always implemented with Visual Basic "front ends" wrapping SQL Server or Access. An advantage of the two-tiered applications is that are easy to write. Two-tier architectures react to change within the database schema far better than the single-tier architecture, but there is still valuable code that could be reused over the long term embedded within the user interface.

A three-tier architecture with no distinct separation of modules is certainly possible. In such an arrangement, a distinct set of modules would provide all of the functionality that is required irrespective of whether a particular customer licenses a particular module or not. The advantage to such an architecture is that it involves supporting less code, but may end up loading the executables that are delivered to each customer -- potentially affecting performance and maintenance issues.

The exemplary non-limiting Figure 2 architecture 100 provides a three-tiered modular approach as explained above. The Figure 2 architecture including distinct separation of modules is perhaps initially more complicated to set up than certain other architectures, but is able to handle change far more easily and does not carry around unnecessary executables/source code. Separating the user interface modules 110, 112, 114 within applications layer 106 from the various modules within business layer 104 and deliberately keeping the user interfaces focussed on addressing user interface issues can allow easier substitution or addition of new user interface functionality. This is especially important for a long-term concept or an application aimed at something other than stock auditing, for example, would not necessarily need the same look and feel as the stock audit user interface 110 -- which provides a visible design of the user interface based on user interface guidelines in order to make the software easy to use and consistent with the current operating system guidelines. It is also important for offering user interface customization as a value-added service or for other reasons. The architecture of Figure 2 is designed to readily handle change in design, tools and technologies. In the medium term, it is perceived that non-trivial changes to the underlying database schema within services layer 102 may be needed. All external pieces of technology are deliberately kept to the outside parts of the architecture 100 in the illustrative embodiment.

### GENERAL DESIGN FEATURES OF ARCHITECTURE 100

Various system wide concepts are adopted throughout the design and implementation of architecture 100 to provide such features as error handling, the format of files and databases, and implementation languages. For example, architecture 100 is able to receive a number of input files from host computers. In the illustrative embodiment, files that satisfy a single data requirement are always placed within a single distinct input directory. For added insurance, a file can contain a fixed header that details the function the file was aimed at. The specific implementations provide for a the general directory structure used throughout architecture 100, formerly for files that form the persisted information on the personal computer about customer installation and configuration, formerly for files that are sent to and from the hand-held terminals, and formats of files used to interface with all customer host systems.

Architecture 100 in the exemplary embodiment is also able to send a series of files detailing the results of a data capture function. As a number of functions may be supported by a single installation, the files that satisfy a single data requirement are, in the illustrative embodiment, placed within a single distinct output directory. For added insurance, a file can contain a fixed header that details what type of result file is being sent back.

During batch processing, files of a fixed format are sent between the hand-held terminals via the communications software in order to "prime" the hand-held terminals for use and download information from the hand-held terminal after an operator has physically counted a series of locations.

In the exemplary embodiment, the relational database 142 is abstracted from the user interface code within architecture 100 in order to, among other reasons, allow extensions and changes within the database schema that do not effect the user interface directly. The database schema initially used by the exemplary embodiment to support the stock auditing module 132 may be, for example, a non-normalized database. Additional normalization may be used to reduce space wastage and enhancement to handle the different data capture functions. A particular data capture function may require a different or additional database schema to be introduced.

In the exemplary embodiment, architecture 100 is designed to support multiple languages. For example, the software is expected to work in other locations with the minimum of change. All user interface objects and strings to be displayed are not stored within the code in the example embodiment, but are stored within resource files instead in order to make the localization process more efficient. For installation, in the exemplary embodiment, there are two sets of resource files -- one containing resources that support the user interfaces and one containing resources that support the business layers 104. Each pair of resource files contains all the strings and forms required to support one language. If a customer requires another language, then a translation can be performed on the resource files and these files are then linked back into the source to provide a new set of files. It is the responsibility of the installation program in the example embodiment to install the correct language version of the software.

In the illustrative embodiment, a variety of types of non-database storage techniques are used to persist information that supports the installation of architecture 100. For example, the registry contains three types of entries:
- COM (executable) entries,
- configuration related entries,
- user related entries.

In the illustrative embodiment, each registered COM component and interface makes entries within the registry. These follow a define form in the illustrative embodiment and are present for clients of a particular component to instantiate the component for use. Although non-trivial, the format and location of these registry entries are well documented and handled automatically by conventional tools It is the responsibility of the installation program 114 to support registration of COM components and interfaces during install and cleaning of these entries during uninstall.

Configuration related entries and user related entries are placed in their own dedicated registry keys in the exemplary embodiment. If some of the entries persisted for either the configuration or particular users begin to reduce the effectiveness of the registry (e.g., by making it too large) then some functionality may be moved to files instead. The file system supported by the computer system 60 may also include an installation directory containing all components of architecture 100, and a working directory where client specific files are stored. The working directory may be broken down into a series of subdirectories that meet particular requirements. The database 142 may be stored within the working directory if desired.

The run time configuration of architecture 100 is dependent on a series of registry entries and related files within the working directory. Different customers can be offered different licenses and corresponding different functionality. For example, some customers may not require the full system functionality and could license some but not all modules. Other customers may require alternative or enhanced functionality. Different "versions" of the software can be provided by simply substituting one module for another or by adding additional modules. Direct registry and file manipulation by users is permitted in order to allow users to access and manipulate configuration items. An administrator tool 112 replaces most of the direct registry and file manipulation that is needed in the short term. Administrator tool 112 has the benefit that each request is passed through a component within the business layer 104 that performs validation checks. The administrator tool 112 is geared for the competent user or dealer that already has a configuration for a customer on the machine and wishes to make some minor changes.

The business layer 104 in the exemplary embodiment supports the importing and exporting of current configuration into a main directory. This provides the benefits of allowing a customer to export their current configuration and provide it to technical support for analysis. Additionally, a disk can be supplied at installation that contains the default configuration for a customer -- which can then be imported into the business layer 104 simply and efficiently.

With respect to memory management issues, all memory passed between the applications layer 106 and the business layer 104 in the exemplary embodiment is allocated to one of the COM heaps. To maximize performance, sufficient memory is allocated by the server of COM method call and de-allocated by the client in the exemplary embodiment.

With respect to concurrency, all business layer 104 components and service layer 102 components are made thread-safe in the exemplary embodiment. In the long-term, support for multiple connections from hand-held terminals running over the RF communications protocol is desirable. Certain key algorithms may be implemented using multiple threads to ensure the application can provide feedback to the client code while the algorithm takes place. One example algorithm is the reconciliation process. In the exemplary embodiment, an MFC is used internally within many of the business layer 104 components and service layer 102 components. A wrapper macro can be used to insert appropriate process entry points to handle threading successfully. The user applications aren't necessarily thread-safe or incorporate multiple threads.

In the illustrative embodiment, the software is not necessarily portable, but rather is targeted for the particular operating systems (e.g., Microsoft's 32-bit Windows operating systems). For example, the applications layer components 106 may be written using Visual Basic, and the business layer 104 components all use the COM extensively to provide the framework to build the components. Although the software is not portable in the exemplary embodiment, this does not preclude communication with non-Windows based hosts. Furthermore, in other embodiments, the software can be made portable using appropriate porting or other techniques.

In the illustrative embodiment, architecture 100 is designed to allow a variety of languages to implement the system. This allows tools that design user interfaces to write the application layer 106 and tools to implement business rules to write the business layer 104. COM is a binary standard defining how objects interact within the Microsoft platform, and is used to form most of the interfaces between objects within architecture 100 in the exemplary embodiment. As the architecture is not tied to any particular implementation language, this leaves flexibility to change languages at will.

Errors can be detected at any level within the software but they are preferably reported visually from the application layer 106 as opposed to some other layer. Depending upon the type of service (e.g., whether it is a COM object, a database query, a DOL supporting exported C functions, etc.), the mechanism used to indicate warnings and errors differs significantly of the exemplary embodiment. It is the responsibility of each business layer 104 component to trap the raising of all errors. These components must then return them (if required) in a standard form. In the illustrative embodiment, the severity of each error/warning and the observers of same classify each error/warning. The severity defines the importance that the system attaches to the event (e.g., "is it a warning or will the system not function from now on?"). The observer identifies who should be notified of the event. In the illustrative embodiment, the standard form used is the COM rich error mechanism. Careful use of generic error handlers is observed (e.g., writing a "try catch" handler in C++). It is no benefit to the user/technical support engineer to have business layer 104 objects that catch every error raised below them and wrap it with one message indicating on the lines of "invalid error handled." The observers that are notified about the error change depending upon the type and severity of the error/warning. For instance, in the exemplary embodiment, if the architecture 100 can't start because there is no valid authorization, this results in a warning message being displayed (but nothing logged - since nothing is running). However, the successful completion of a Count is reported to the audit log in the exemplary embodiment.

The various user interfaces are implemented as a set of application executables in the exemplary embodiment. The components within the business layer 104 and services layer 102 all run under the same process space in the exemplary embodiment. This process is distinct from all of the user interfaces executables and is known as a "COM surrogate." A COM surrogate realizes two benefits -- namely code isolation and security. The address space that is available to the components within the business layer 104 and service layer 102 is not available to the user applications layer 106 in the exemplary embodiment. Any IPC between the two layers is always through COM in the exemplary embodiment, although other embodiments could use different communications techniques. For ease of debugging, architecture 100 can be set up to run the business layer 104 and services layer 102 under the same process as the user interface application 106. The communication software that supports batch communication may be run as a hidden process. A server process separate from the main business layer 104 and service layer 102 is used to support RF (wireless) functionality in the exemplary embodiment.

In the exemplary embodiment, all reports are generated by software running in the applications layer 106. All data that can be printed on a report is accessed solely from the business layer 104 using standard COM calls. This flexibility allows a client programmer to quickly generate any report using a client language that can drive COM (e.g., VB and XL). In the exemplary embodiment, it is not the responsibility of the business or services layer 102, 104 to actually print out any reports. Such reports can be generated and printed by an external report generator package.

### DETAILED DESCRIPTION OF ARCHITECTURE 100

The following is a more detailed description of the various components that make up the architecture 100 shown in Figure 2.

### Business Layer 104

As discussed above, business layer 104 contains a number of different modules in the exemplary embodiment, including:
- nucleus manager 120,
- user manager 122,
- configuration manager 124,
- host interactor 126,
- audit engine 128,
- hand-held terminal interactor 130,
- stock audit module 132.

### Nucleus Manager Module 120

In the illustrative embodiment, nucleus manager module 120 contains the entry components to the stock audit module system. Within this exemplary nucleus manager module 120, there is a single component that provides generic functionality to all consumers of the architecture 100. This functionality includes, for example, lifetime management for the current user and providing particular components for the client code. Nucleus manager 120 may also include a nucleus registration component providing registration and licensing information to all consumers. In the illustrative example, nucleus manager 120's nucleus interface component may be complemented by the stock audit module 32. The stock audit module 132 is responsible for understanding the part of the system relating to stock auditing.

In more detail, the exemplary nucleus manager module implements a set of components within the overall system providing functionality of the such as, for example:
- initialization and termination
- read access to the registration information available for the customer
- log in/log out functionality for the current user
- system integrity checks
- enforcing correct access to license modules
- providing support for installing software.

In the exemplary non-limiting embodiment, the nucleus manager module 120 may include a nucleus interface component, a registration component, and a session component and an installer component. In the exemplary embodiment, the nucleus interface component provides initial access and they also perform system integrity checks to see what features are to be offered. The registration component may provide read only access to information that defines the license capabilities of the overall system. The session component may be available if the nucleus interface component has insured the set-up of the machine and directory structure is valid. This exemplary session component provides log in and log out functionality and provides access to the modules within the overall system. The installer component in the exemplary embodiment is used to support the installation of the software and to report to the nucleus interface whether the software is installed correctly. The overall functionality of the nucleus manager module 120 may support a single log in user or multiple users (via the session concept). The majority of the code within the nucleus manager module 120 may be generic (i.e., it makes no reference to stock auditing functionality) to allow for easier addition of new modules. In the exemplary embodiment, the nucleus manager is implemented within a DLL (i.e., a standard ATL component with no visible use or interface). In the exemplary embodiment, the nucleus manager component 120 has no direct connections to any files except during installation and has no direct connection to any database. All strings formed within the nucleus manager component 120 preferably uses the language module. Directory paths that provide the absolute location of the directories are preferably held within the registry, and registration details are persisted solely in a connected Dongle in the exemplary embodiment. Preferably, all internal classes are read-safe, none of the code is portable and the module is implemented as an ATL/C++ component.

### Configuration Manager 124

Business layer 104 also includes configuration manager 124 in the illustrative embodiment. Briefly, the configuration manager 124 provides generic configuration support and allows easy inclusion of new data features. In more detail, configuration manager 124 in the exemplary embodiment defines the customer specific behavior both within the personal computer based software and within any software running on hand-held terminals that communicate with the personal computer. Information directly understood by the configuration manager 124 in the exemplary embodiment is preferably generic in nature. For instance, configuration manager 124 understands which part of the registry that some configuration information is stored and some details about the customer owning the software and the stores owned by the customer. The configuration manager 124 in the illustrative embodiment is responsible for ensuring the current configuration enables the system to be run. The information held within the configuration manager 124 is actually persisted, in the illustrative embodiment, with the combination of the registry and files. If an entry for the configuration manager 124 does not exist, then a sensible default is taken. In the illustrative embodiment, the configuration manager 124 provides a set of generic calls similar to the Registry API that all other modules should use when they need to persist information. This ensures that entries are always placed in the correct location, and allows the persistence mechanism to be changed at a later date if required. The configuration manager 124 implements a series of module specific configuration components. For example, a stock audit configuration component may be provided.

In more detail, the exemplary configuration manager 124 implements a set of components that are responsible for managing all knowledge about a customer (e.g., except for its name that is held within the Dongle), managing all knowledge about the storage that belonged to the customer, managing all generic information about the configurations that are available for use (including their type) and, managing type-specific configuration information, and providing registry/read/write access to business components and clients to persist information. In the exemplary embodiment, the configuration manager module 124 may include the following components:
- a configuration enumerator that provides a standard enumeration interface to iterate throughout the available configurations
- a configuration component that provides access to a single configuration that is available for the customer
- a stock audit configuration component providing access to a stock audit configuration available for the customer
- a customer component providing access to customer specific information (e.g., the address and supporting telephone numbers)
- a store and enumerator component providing a standard enumeration interface to iterate through all of the stores that belong to a customer,
- a store component providing access to store specific information, and
- a registry component providing read/write functions for client code to persist general information within a known and managed part of the registry.

In the exemplary embodiment, the configuration manager module 124 is designed to initially support the stock auditing configuration within a generic object model existing to allow the addition of new data capture requirements/configuration logic without significant change. In the exemplary embodiment, the configuration manager module 124 is responsible for holding a number of independent configurations at any one time. Thus, in the exemplary embodiment, the configuration manager module 124 takes sole responsibility for the files that define the customer, the available configurations and the individual stores known to the customer, as well as all persisted information. In the exemplary embodiment, the configuration manager module 124 has no direct connection to a database or to the registry. In the exemplary embodiment, all strings form within the conform within the configuration manager is the language module. As a separate tool, the configuration manager module 124 provides a configuration wizard that is used by product managers or any dealer/customer with the correct license to generate a configuration. This tool does not interact with the rest of system. The configuration wizard presents a series of screens used to select all of the configurable options for a particular configuration which is then preferably persisted in an .INI file. Once the configuration has been agreed by customer and signed off, it is ready to be imported into installed application.

### Host Interactor 126

In the illustrative embodiment, host interactor 126 manages all interaction with the customer's main/host computer. Briefly, it treats all types of input file formats in generally the same manner, and imports and exports data into the system quickly with no loss of integrity. In more detail, host interactor 136 understands the format of the data that is accepted from the host machine and the format of the data that is sent to the host machine after a successful data capture process. If a transformation of the data needs to be performed by an external process, either before data is received or sent, the host interactor 126 is responsible for ensuring that happens. The host interactor decides what is to happen to each file it receives from the host machine (initially this is done through simple file name recognition) and dispatches it to one of a set of module-specific components within the architecture 100. The host interactor 126 is provided with a set of module-specific host interface components from the nucleus interface.

In more detail, the host interactor module 126 implements a set of components that are responsible for:
- providing methods to take data supplied by a host or other computer for a given data capture function, check that the data looks valid, and stored the data within the database managing entries for the function
- provide methods to extract data held within a database for a data capture function and place them in a digestible form for an external host or other computer (e.g., normally a file within a directory)
- provide methods to give feedback to the client programmer during a load or save of the data
- manage the running of external batch files on data prior to entering the system and after leaving system (e.g., dependent on the configuration).

In the exemplary embodiment, the host interactor module 126 includes a host manager, an input interactor and output interactor. The exemplary host manager provides top-level access to the host interactor. The input interactor provides the methods used to input/load data from a host computer for a particular application. An output interactor provides the methods used to output/save data from a host computer for a particular configuration. The host interactor module 126 addresses a number of problems including, for example, hiding the differences between the supported file formats in a localized body that does not affect the implementation of surrounding code; providing an asynchronous loading/saving routine for the clients' use and insuring that no other update to the database or actual read on the database can succeed during the update process.

In the exemplary embodiment, the host interactor 126 may include additional modules such as, for example:
- consolidated saver
- raw data saver
- location/SKU saver
- expected stock loader
- dual key loader
- valid locations loader
- expected location loader
- attributes loader
- transfers loader.

In the exemplary embodiment, the host interactive module 126 has direct connections with all of the files within a configuration's HOSTIN and HOSTOUT directory and has connections via a set of database helpers to the underlying tables. In the exemplary embodiment, the host interactor 126 is the sole piece of software that updates expected information within the database. During the update, all other objects are prevented from accessing the database to prevent conflicts.

### Hand-Held Terminal Interactor 130

The hand-held terminal interactor manages all interaction with the hand-held terminals, whether they are running batch or RF mode. Briefly, the HHT Interactor 130 provides a generic wrapper on top of the communications software that interacts with the hand-held terminals, and it allows the addition of new communications modules (such as RF) with the minimum of impact on the remaining portions of the system. The hand-held terminal interactor 130 provides a small set of functions for the rest of the architecture 100 to use, including file transfer and a set of remote procedure calls. It also provides functionality for the hand-held terminal to use.

In more detail, in the exemplary non-limiting embodiment, the hand-held terminal interactor module 130 implements a set of components that:
- generate configuration files to be passed to the hand-held terminal software for the current configuration and count
- generate look up files to be sent to the hand-held terminals while containing SKU, dual key and description information
- maintain information about the locations that have been visited by hand-held terminals during the count
- provide a mechanism to pass files to the hand-held terminal software or intermediate programs
- provide a mechanism to check whether files are available for downloading from the hand-held terminal software
- provide a mechanism to download files from the hand-held terminals and integrate into the overall system.

In the exemplary non-limiting embodiment, the hand-held terminal interaction module 130 is used by components within the business layer 104. In the exemplary embodiment, the hand-held terminal interactor module 130 may include a hand-held terminal controller, a communications submodule, a data receiver submodule communicating with a transaction manager having a database connection, a data generator communicating with a location map manager, a configuration generator and a lookup generator. The hand-held terminal interactor module 130 in the exemplary embodiment is solely responsible for managing various configuration files including:
- HHT configuration file
- HHT count configuration file
- primary lookup file
- secondary lookup file
- HHT description file
- location map file
- location map update file
- HHT data file

In the exemplary embodiment, the HHT interactor module 130 has connections via a set of database helpers to the underlying tables and may the sole piece of software that updates expected information within the database.

### User Manager 122

In the illustrative embodiment, the user manager 122 holds information about all of the users that are configured to use architecture 100. Briefly, the user manager module 122 provides a flexible and consistent user management interface to the application code. For each user, a series of properties are defined that defines both who the user is and what the user is allowed to do. In the illustrative embodiment, the properties are split up into three distinct groups for a user:
(a) There is a set of module independent properties that are understood. These may include, for example, the name and password related to a user.
(b) There is a set of module dependent properties defined for each module that the user is allowed to use. For example, if stock auditing is supported, one of the properties defines whether the user is able to access area reports. This functionality may be provided by a set of module-specific components.
(c) There is a set of properties that are not understood by the user manager 122 but manage to provide a central location for them. These properties are normally defined by the user interfaces and include window positions, etc.

At any one time, the user manager 122 in the illustrative embodiment knows who the current user is and provides functions that all other modules can call to perform security checks and the like.

In more detail, the exemplary user management module implements a small set of executables providing user management functionality for the business objects in user applications. The user management module 122 in the exemplary non-limiting embodiment is responsible for:
- validating user access
- managing access to specific areas of this system based on the user plus for he has current access rights
- managing a "profile" breach user (e.g., window metrics, most recently files, etc.).

In the exemplary embodiment, the user management module 122 includes a user executable and a user manager executable. The user manager executable is responsible for validating user log ins, enumerating the list of known users and for general user management tasks such as creating new users and deleting existing users. It is also responsible for managing the user security files which provides information relating to each valid user. In the exemplary embodiment, an instance of the user executable component is created when the user log is on. This executable provides the interface used by the client to access the functionality of the user manager module 122.

In the exemplary embodiment, STL map implementation may be used to provide a speedy and flexible solution. The user manager module 122 allows the user privileges to be added flexibly and easily, and is also able to support a number of user definable groups and functions which can be used to define areas of the system that each user is allowed to access. For example, user groups may include administrator, auditor and read-only. User functions may include stock audit. In the exemplary embodiment, the user manager module 122 provides a "database" containing details of known users which may be implemented as a STL map the number of STL sets, persisted within standard Windows.INI files.

### Audit Engine 128

In the illustrative embodiment, the audit engine 128 receives every event that is to be audited or error that is potentially to be logged. Briefly, audit engine 128 provides a fast mechanism for both business and application code to log events and errors for later analysis. The behavior of the audit engine 128 in the illustrative embodiment is dependent on the operating system, the current user's privileges and the overall system configuration. For example, as there is no event viewer built into a Windows 98 installation, errors can't be logged to the event log under those conditions. In the illustrative embodiment, the audit engine has no understanding of the internal details about an error. All it knows is the severity, source of the error, required destination(s) for the error, and a textual string representing the error.

In more detail, in one exemplary non-limiting embodiment, the audit engine 128 implements a small of executable components providing auditing functionality for the business objects and user applications. In the exemplary embodiment, the module is responsible for:
- providing a generic auditing/error reporting service for client code
- providing specific data capture function auditing/error reporting services as required
- hiding information about where the events are being persisted
- providing additional support for trouble shooting.

In the exemplary embodiment, the audit engine module 128 includes an audit engine, an event log and the stock audit trail. The audit engine is responsible for allocating both the event log and stock audit trail objects. The event log is used by client code to persist errors, and can also send messages during troubleshooting. The stock audit trail component provides audit support for a single count. In the exemplary embodiment, the audit engine takes sole responsibility for managing the event log file that gets output into the customer directory and is also responsible for insuring that this file never goes beyond a certain size. The audit engine also takes sole responsibility for managing the audit trail files that are output into a particular count directory. The audit engine is capable of logging different types of errors including "rich" errors, debugging strings and output strings to files.

### General Module Requirements

In the illustrative embodiment, each module that requires an actual data-capture solution (e.g., stock auditing) provides:
- a manager component (this is the top-level logic that provides entry to all functionality for the module),
- a host interaction module (this provides the generic host interaction module with the ability to bolt on module-specific handling of input and output files),
- a hand-held terminal interaction component (this provides the generic hand-held terminal interactor with the ability to bolt on module-specific handling of files to be sent to and from the hand-held terminal).

### Stock Audit Module 132

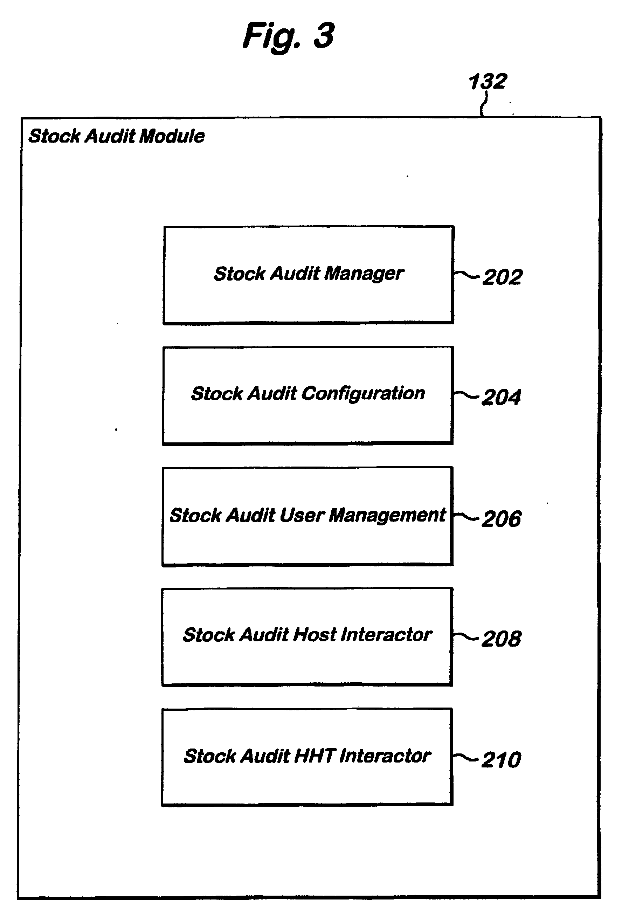

In the illustrative embodiment, the stock audit module 132 generally consists of a series of supporting components that add specific functionality to the components outlined above to allow the customer to perform stock audits. In the illustrative embodiment, the stock audit module 132 itself comprise a number of sub-components including:
- stock audit manager,
- stock audit configuration,
- stock audit user management,
- stock audit host interactor,
- stock audit hand-held terminal interactor (see Figure 3).

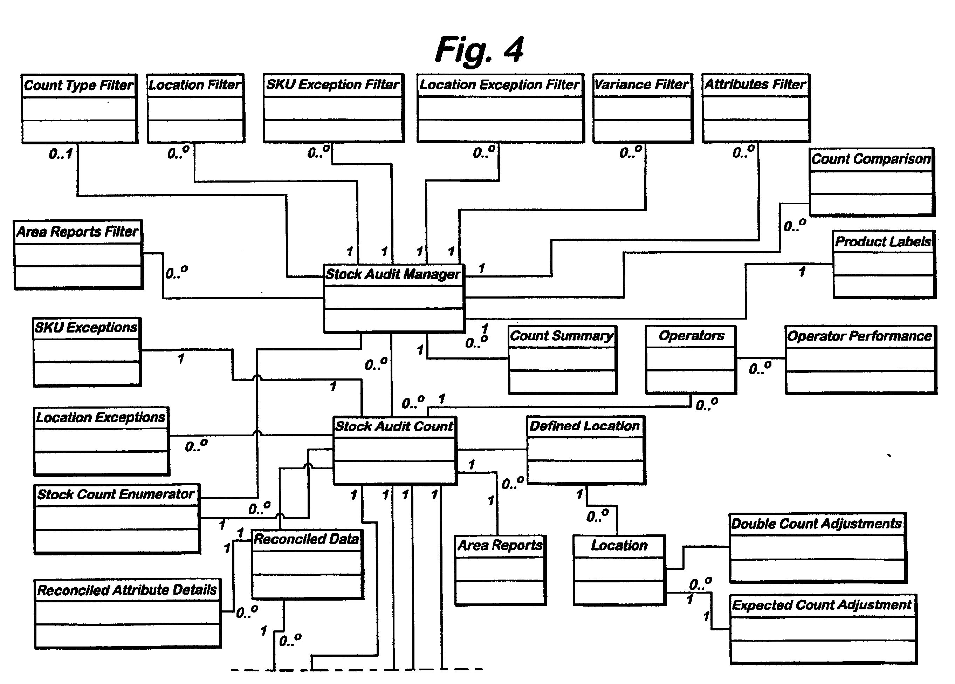

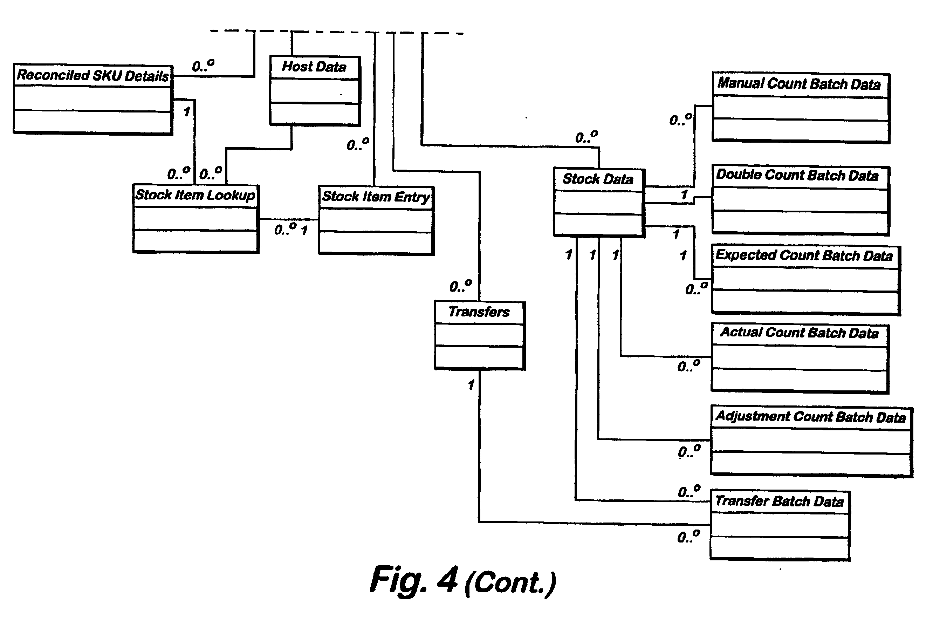

In the example embodiment, the stock audit manager 202 is the main component of stock audit module 132. Stock audit manager 202 provides access to a large set of components giving details about all of the counts that are managed by the architecture 100 and the current count. The diagram shown in Figure 4 is an example detail of the main components within the stock audit manager 202. In this example, a customer module provides information about the customer that the software is licensed to. A store module is provided such that each customer contains zero or more stores (each store is either a retail or a warehouse store). A count module keeps track of the number of counts that can be performed on a store at a given time. A count gives access to the expected count information (if it exists), all physical count information and functions to manage the count. A count summary module provides a high level summary of the count, e.g., how many good locations there are within the count, the total variances, etc. An attribute list is provided as well. Each count has a set of attributes that are associated with each stock item. This set normally includes, for example, departments and groups. After reconciliation, reports relating to the attributes of stock items can be generated.

In addition, there are a number of stock items within a count. A stock item may hold expected count and physical count information.

There are also a number of locations that are defined for a count. Each location knows whether it is a good, bad or unchecked location. A location is associated with a set of location data that have been performed for the location/stock data that is expected to be found.

Location Mismatches - there are potentially a series of mismatches for a particular location. There are two types of mismatches, namely double count and expected count.

Mismatch - an individual mismatch contains details for one mismatch.

Physical Count - a physical count abstracts the differences between a manual count performed on a location and all of the other counts (i.e., actual and double).

Non-Manual Count - a non-manual count holds a set of lines that have been physically scanned/keyed.

Manual Count - a manual count simply holds the total number of items that have been counted for the location.

Exception - each count has a series of exceptions that define the exceptions that have been determined during the count.

Operator - each operator holds the performance of the actual operator and access to the list of exceptions that the operator is involved with.

Raw Data - each count is a set of raw data. This provides means with access and a complete set of information that has inputted at all of the hand-held terminals.

As shown in Figure 3, the stock audit module 132 in the illustrative embodiment also includes a stock audit configuration component 204. In the illustrative embodiment, the stock audit configuration component 204 understands everything needed to configure the system to perform stock counts for a particular customer. Information held includes the non-generic structure of the files passed between the personal compute and the hand-held terminals during batch operations, whether dual keys are supported, etc. In the illustrative embodiment, only the HHT interactor 130 understands all generic information regarding the hand-held terminals. The stock audit configuration component 204 in the illustrative embodiment uses functionality provided by the generic configuration manager 124 to ensure potential change to the persistence mechanism is easily handled.

The stock audit user management component 206 shown in Figure 3 understands all of the properties and rules that make up a user performing a stock audit in the exemplary embodiment. Examples of these properties include, for example, whether the current user is able to change the format of any output data, whether the current user is able to view management reports, etc.

The example stock audit host interactor component 208 is responsible in the illustrative embodiment for adding stock audit related processing of files that are sent to or received from the host machine. In the illustrative embodiment, the stock audit host interactor 208 is the only component that understands the physical organization of the file. It is responsible for transferring expected information into the supporting databases, and for generating the files that are to be sent back to the host.

In the illustrative embodiment, the stock audit HHT interactor 210 is responsible for adding stock audit related processing of files that are sent to or received from the hand-held terminals. In the illustrative embodiment, the stock audit HHT interactor 210 is the only component that understands the physical organization of the file.

In more detail, the exemplary stock audit module 132 implements a large set of components responsible for delivering stock auditing to a customer. The module is responsible for:
- performing an actual stock audit/count
- understanding information received from both the hand-held terminals in external computers (e.g., host computers) and sent to the hand-held terminals and external computers
- providing a model for user interfaces to be built to present an ongoing stock audit.

Components directly relating to stock auditing may be logically grouped into the following:
- configuration
- count management
- active count.

The configuration components hold the information about all the stock audit configurations that are valid for the customer. In the exemplary embodiment, there is no per count or per store information held within these components. These components provide methods to define a configuration and methods to access this information during a count.

The count management components understand the number of stores that have had counts performed for them over time and holds historical information relating to the performed counts. These components also understand which counts are currently active within the system.

The active count components understand the information that supports a stock count that is currently being carried out. They understand the process starting when a new count is created, through the loading of expected data, importing of data from the hand-held terminals, through reconciliation and count completion (including sending data to the host computers).

In terms of count state, a count (inventory process) can be in a variety of states including, for example, count selected but not started; count in process; count being reconciled; count has been reconciled; count has been completed and can be rewound in case data was incomplete; count has been completed and count details have been deleted; count has been deleted.

Upon selection of a count, the auditor component initialized the count prior to use. In this operation, the store where the count is to be performed is chosen, either expected count information or stock list has been loaded, and locations and areas are assigned. The hand-held terminals are then primed for use. At this stage, various information (e.g., stock lists, expected quantities, list of locations, list of SKU's, list of transfers) may be displayed.

When a count is process, the operators use the hand-held terminals to perform physical counts of the stock. Upon completion of a series of locations, the hand-held terminals download information to system 60. The auditor component monitors the progress of the count potentially making adjustments/corrections if problems arise. During this stage, information such as a list of stock exceptions and list of physical batches that have been received from the hand-held terminals may be displayed.

During the count reconciliation phase, some additional processing is performed to realize more general reports. These reports give a higher level of information of what is happening within the count.

Once the count has been reconciled, further imports of data from the hand-held terminals or the host computer are not allowed. However, downloads from batch hand-held terminals are still enabled. Additional information may be displayed during this phase relating to the count.

In the exemplary embodiment, to create a new count the client tries to create a stock count instance from the stock audit manager by passing the name of the store where the count is to be performed, the configuration to be used on the name of the count. The stock audit manager validates the supplied configuration information and then creates a directory structure for the new count and takes the tables within the database for the new count. Initially, the number of locations that are available to used is set to zero. This is replaced automatically in the warehouse store when the valid locations file is downloaded. In the retail store, the client enters the number of valid locations and areas.

### Services Layer 102

As discussed above, the services layer 102 includes a number of different components including, for example:
- nucleus shared library 140,
- relational database 142,
- communication tools 144,
- generic library 146,
- Win 32 shared library 148,
- language independence 150.

Each of those components is discussed in more detail below.

### Language Independence Module 150

In the illustrative embodiment, the language independence module 150 holds all strings that are used within the business layer 104 and the services layer 102. Language independence module 150 does not come in the illustrative embodiment, contain any resources that detail user interfaces to be displayed -- as this must be maintained by the user interfaces themselves in the illustrative embodiment. The language independence module 150 in the example embodiment contains the strings needed to support a single language (where the default is English). The strings within the business layer 104 and the services layer 102 are logically grouped within a single resource file within the example embodiment. In the illustrative embodiment, the language independence module 150 is implemented as a single dynamic linked library exposing a small API used to return strings to client code.

### Generic Library Module 146

In the illustrative embodiment, the generic library 146 contains code (e.g., C++) that is platform independent. Classes are contained and implement basic data structures that aren't tied to any particular operating system. In the illustrative embodiment, the generic library does not contain code that is specific to either the stock audit functionality or to the operating system that the library runs on. The generic library module 146 may be implemented as a static linked library that is linked into all business layer 104 modules.

### Operating System Shared Library 148

The shared library 148 in the illustrative embodiment contains code (i.e., C++) that is bound to the personal computer operating system. Some of the classes in the illustrative embodiment are tied into MFC, and others sit straight on top of the operating system. In the illustrative embodiment, no code exists within the operating system shared library 148 that is specific to the stock audit functionality. In the illustrative embodiment, the shared library 148 is implemented as a dynamic linked library that exposes a series of classes that can be used through implicit linking by all modules.

### Nucleus Shared Library 140

In the illustrative embodiment, the nucleus shared library 140 is a library that contains code (e.g., C++) that is specific to the particular system being provided. The nucleus shared library 140 in the exemplary embodiment is implemented as a static linked library that is optionally linked into a module.

### Component Communication

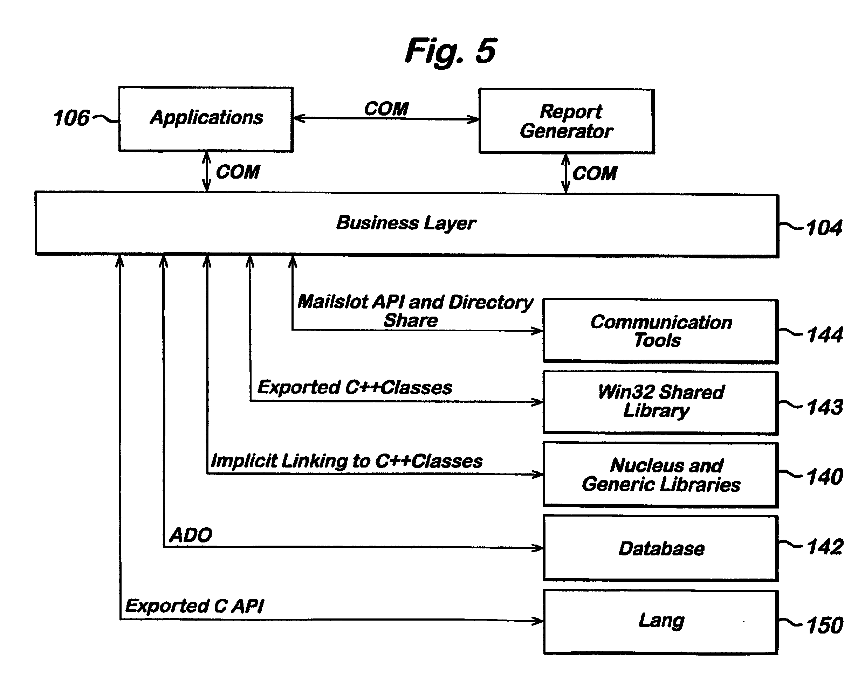

As shown in Figure 2, communication tools 144 are used to assist in communication between various components of architecture 100. In the illustrative embodiment, communication is provided between a number of different components within architecture 100. Figure 5 shows example communication couplings between the various components within architecture 100. The Figure 5 diagram details the links between the main components within the architecture. An indication of the particular interface technology that may be used to provide such couplings is also shown in the diagram. For purposes of simplification, all of the components within business layer 104 have been treated together.

In the example embodiment, there are a variety of different methods that can be used to communicate between the hand-held terminals and the architecture 100 within the customer's application. The differences are based primarily on the amount of time that the terminal can communicate. One method is where the terminal communicates through a terminal cradle connected to the personal computer on which architecture 100 is installed. This connection is only present before and after an actual data capture session performed by an operator. During actual data capture, the terminal is disconnected from the cradle and is out of contact with architecture 100. Thus, this communication method is known as batch communication.

A further method is where the hand-held terminal can communicate continuously with the personal computer on which architecture is installed. This is achieved, for example, through the use of a wireless network. As the connection is persistent (subject to the terminal being within the coverage area of the wireless network), the software running on the terminal can be thinner. This method may be know as RF communication.

In the illustrative embodiment, two distinct solutions are employed to satisfy the batch and RF communications techniques. Generally, the communication mechanism is managed by the HHT interactor component 130 and therefore its coupling to the system is minimized. This allows easier replacement of the communication packages if and when required. In the illustrative embodiment, the HHT interactor 130 is used to completely abstract the different communication solutions.

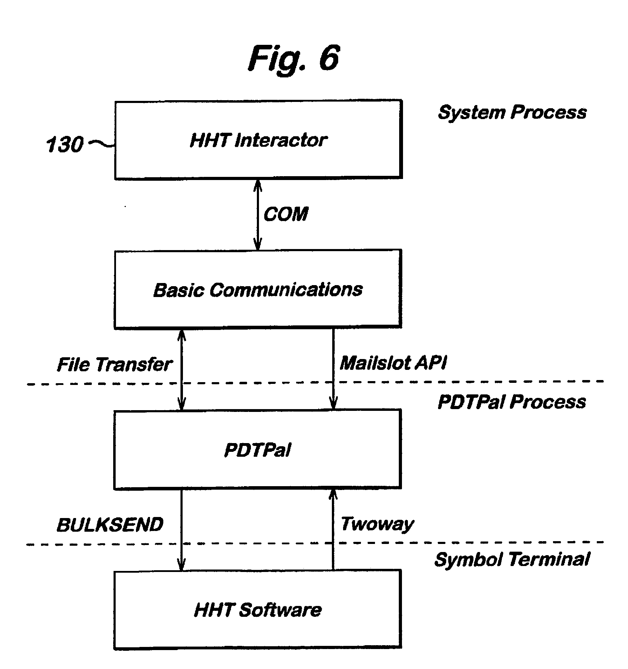

In the illustrative embodiment, batch communication is handled through a linkage between the HHT interactor 130 and software running on the hand-held terminals. Generally, two tasks are used to control file transferred between the personal computer and the hand-held terminals. A mechanism used to control these transfers is wrapped by a batch communications component within architecture 100. Batch communications component exposes a COM interface for the hand-held terminal 130 to pass data to be sent by the hand-held terminals. The HHT interactor 130 exposes a COM interface that the batch communications component connects to in order to pass data received from the hand-held terminals to architecture 100. When a request is received from the HHT interactor 130 to send data to the hand-held terminals, the batch communications component issues a Win 32 Mail slot to the communications process. This instructs the process to switch to a bulk send protocol and send the files for priming down to the hand-held terminals. The files to send are pulled from a file that is created by the batch communications prior to issuing the mail slot. If the transfer process is not sitting in a priming process, then the transfer process works as a slave and just accepts files that are downloaded from the hand-held terminal. The batch communications component places a file notification object on the directory that the transfer process downloads to. Upon detection of a new file, the file is copied into a holding direction. A notification is fired to the HHT interactor 130 that there is more data available. The Figure 6 diagram illustrates the software involved with batch communications and the protocols used between the various pieces of software in the illustrative embodiment.

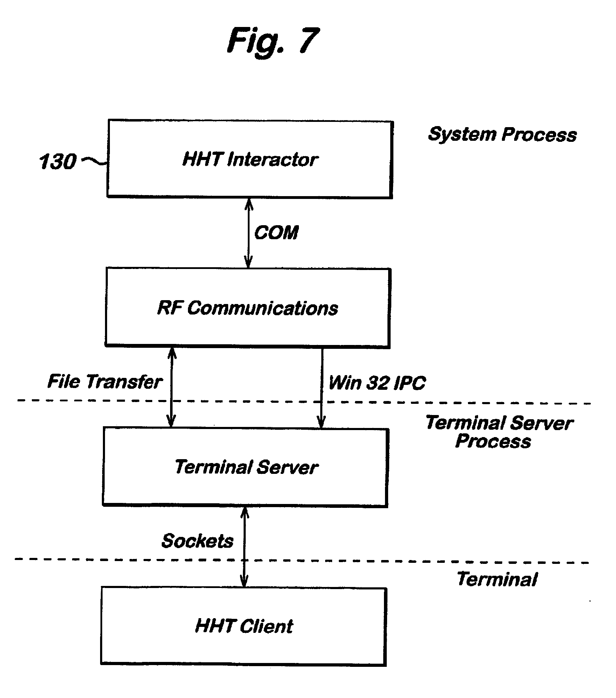

The RF communication solution in the exemplary embodiment makes use of a server process running on the personal computer. This process supports multiple connections from all of the hand-held terminals that are performing data capture operations. The terminal server communicates using Sockets running over the RF network. The terminal server manages a series of files (grouped for each terminal) that holds the results of a data capture operation as it is performed. In the illustrative embodiment, no direct connection is kept between the sessions running within the terminal server and architecture 100. The RF communication component exists to manage the running of the terminal server. This component exposes the same COM interface for the HHT interactor 130 to pass data to be sent to the terminal server. The HHT interactor 130 exposes a COM interface the RF communications component connects to in order to pass data received from the hand-held terminals to the architecture 100. When a request is received from the HHT interactor 130 to prime the hand-held terminals for a data capture operation, the RF communications component issues an IPC mechanism (e.g., the Win 32 Mail slot or COM) to the terminal server process. This instructs the terminal server to temporarily suspend input within the hand-held terminals and update the priming information. If a terminal server is not being primed, then it serves the requests that are received by the connected hand-held terminals. It holds the state of each hand-held terminal and controls the menus, etc. that are displayed on the hand-held terminal. Once a data capture operation has been completed by a particular hand-held terminal, the terminal server copies the file into a holding director. A notification is fired to the hand-held terminal interactor 130 via the RF communications component that there is more data available. If during the running of a data capture operation, a lookup is needed (e.g., SKU lookup), then the files that are held within the terminal servers scope are examined to perform lookup). The diagram of Figure 7 illustrates the software involved with the RF communications and the protocols used between the various parts of the software in the illustrative embodiment.

### HHT Interactor 130

In the illustrative embodiment, the HHT interactor acts as a gateway to the RF communications and batch communications components. The interfaces used by all the other business layer 104 and services layer 102 components is exactly the same for both types of communication. The HHT interactor 130 in the illustrative embodiment understands the communication method that is supported on the installation, and is responsible for managing this information. In the illustrative embodiment, no support is built in to run the two communication methods in tandem on a particular installation, although other embodiments could provide an HHT interactor 130 which is capable of interacting in the batch and in the RF communication modes simultaneously.

### Applications Layer 106

As shown in Figure 2, the applications layer 106 in this illustrative embodiment include the following components:
- stock audit user interface 110,
- administrator tool 112,
- installation program 114.

In the illustrative embodiment, the stock audit user interface 110 provides all of the stock auditing user interface components (see more detailed description of same set forth below). In the illustrative embodiment, the stock audit module 132 (within the business layer 104) provides a set of components that deliver all of the stock auditing functionality. Administrative tool 112 within the applications layer 106 may also be enhanced with an additional view or views that address the stock audit administration requirements.

### Example Process Flows

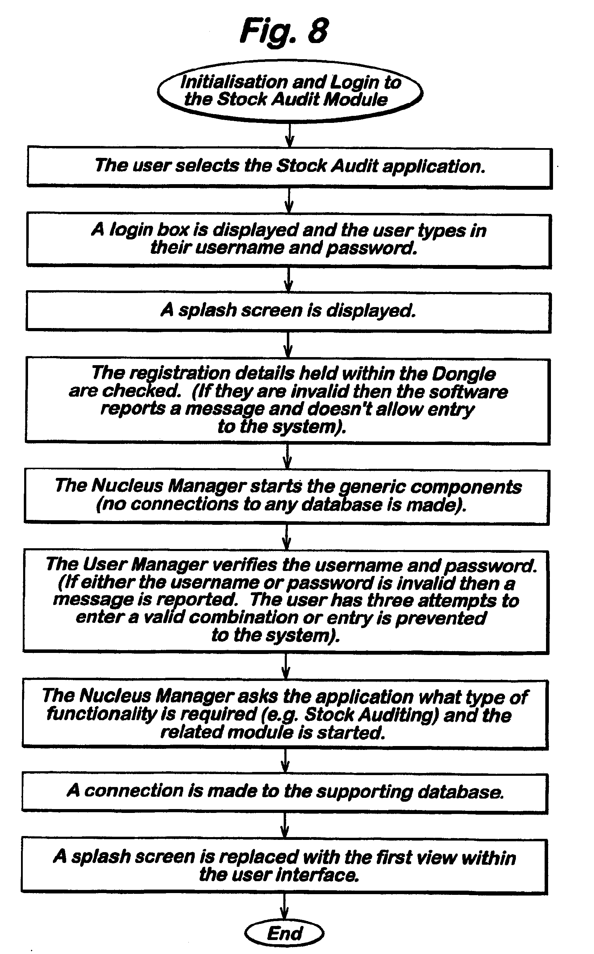

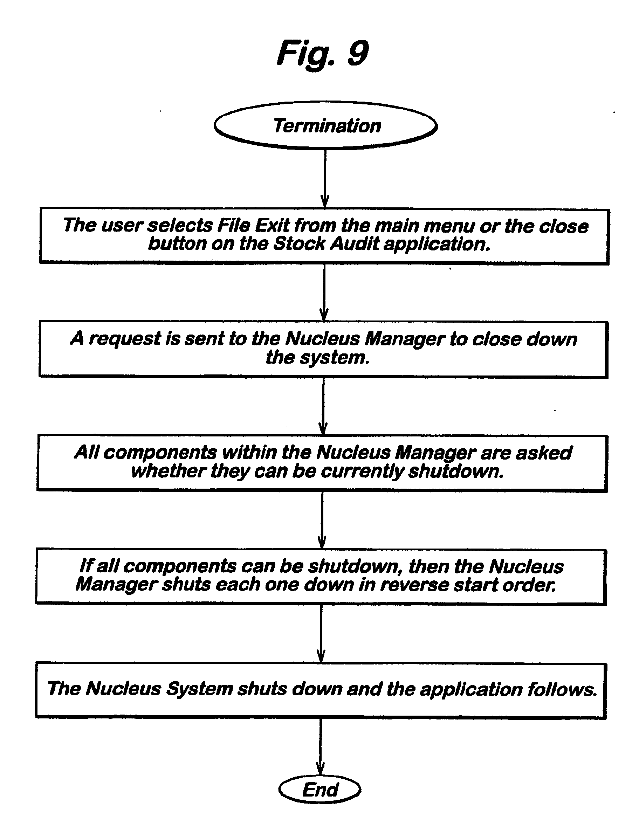

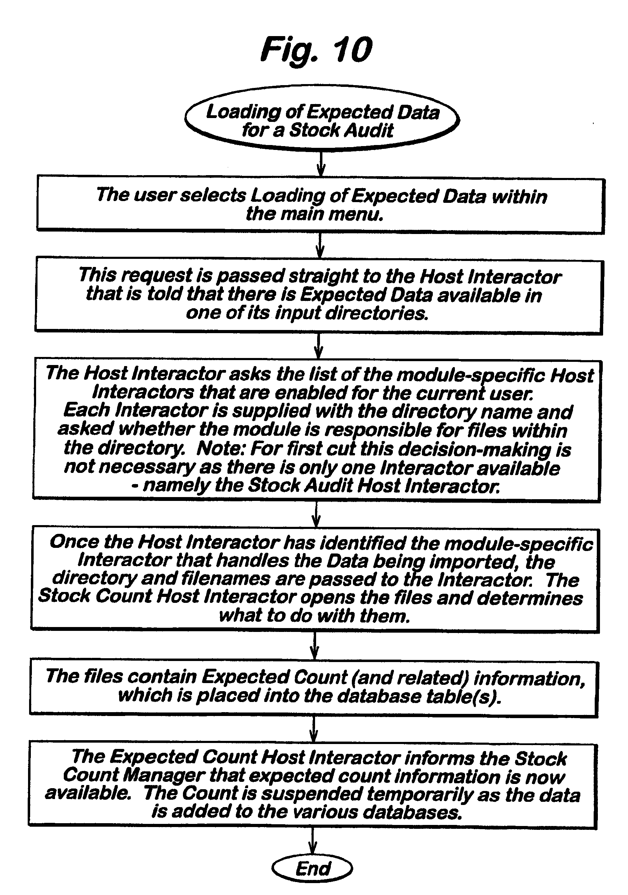

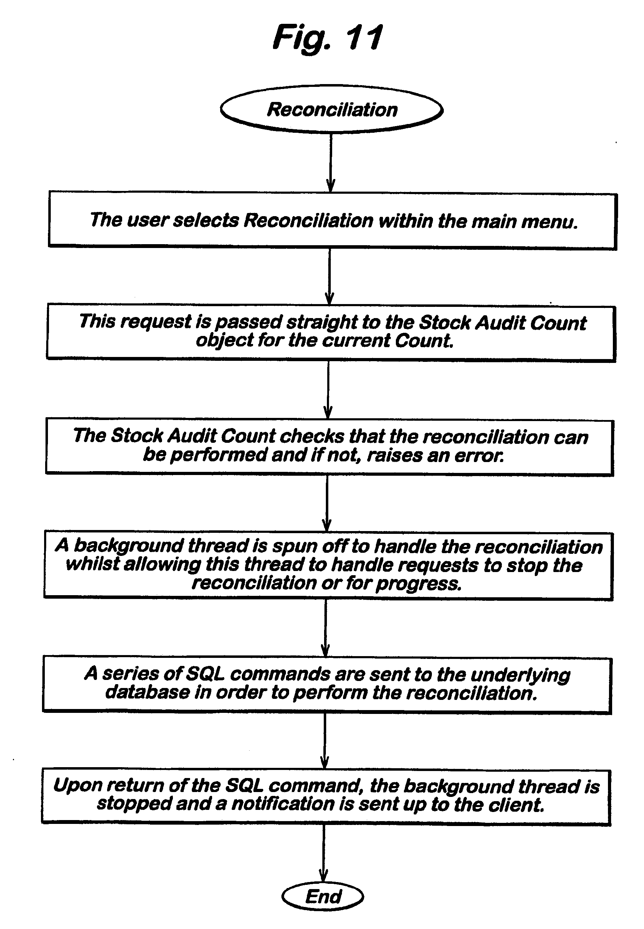

Figures 8, 9, 10 and 11 show example processes performed by architecture 100. Figure 8 shows an example process for initializing and logging in to the stock audit module 132. Figure 9 shows an example process for terminating a session with the stock audit module 132. Figure 10 shows an example process for loading expected data for a stock audit. Figure 11 shows an example reconciliation process. These example process flows are exemplary only and are non-limiting.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A system for auditing the stock of a retail or warehouse establishment, comprising:
a computer (60),
at least one input/output device (62, 64) coupled to the computer (60),
at least one portable terminal (52) communicating at least intermittently with said computer (60), said portable terminal (52) collecting data concerning stock and reporting said collected data to said computer (60),
said system further **characterized by** a multi-layer stock auditing architecture (102, 104, 106) provided on said computer (60), said multi-layer architecture (102, 104, 106) including at least the following plurality of discrete layers:
a relational database (142);
a business layer (104) communicating with said relational database (142), said business layer (104) including at least one auditing module (126) providing business rules; and
an applications layer (106) communicating with said business layer (104), said applications layer (106) providing a user interface via said input/output device (62, 64),
wherein said plurality of discrete layers (102, 104, 106) provide extensibility and updateable by separating the user interface from the business layer (104) and by separating the business layer (104) from the relational database (142).

2. The system of claim 1 further **characterized by** an administrator tool module (112) and installation program module (114).

3. The system of any of the preceding claims further **characterized in that** said business layer (104) further includes a hand-held terminal interactor module (130) that interacts with said terminals (52) via services layer (102) communications tools (144).

4. The system of any of the preceding claims further **characterized in that** said business layer (104) further includes an audit engine (126).

5. The system of any of the preceding claims further **characterized in that** said business layer (104) further includes a host interactor module (126) that interacts with a host computer (66) via a services layer (102) communications tools (144).

6. The system of any of the preceding claims further **characterized in that** said business layer (104) further includes a nucleus manager (120).

7. The system of any of the preceding claims further **characterized by** a services layer (102) providing a language independence component (150).

8. The system of any of the preceding claims further **characterized in that** each of said layers comprises objects, and dependence between said objects is limited to decrease the dependence upon objects.

9. The system of any of the preceding claims further **characterized in that** said business layer (104) receives uploads from and provides downloads to portable terminals (52).

10. The system of claim 1 further **characterized in that** said business layer (104) generates audit trails.

11. The system of any of the preceding claims further **characterized in that** said business layer (104) includes a user identification authentication module (122).

12. The system of any of the preceding claims wherein said terminals (52) comprise portable handheld terminals (52) having bar code scanners (54) and keypads thereon.

13. The system of any of the preceding claims further **characterized in that** said applications layer (106) comprises text files for providing user interface text, and said system can be localized by translating said text files.

14. A method of performing a stock audit function comprising collecting stock audit data using handheld portable data collection terminals (52),
said method further **characterized by** the following steps:
communicating said collected data to a multi-layer modular data processing architecture (102, 104, 106) including a business layer (104) comprising plural modules and a services layer (102) comprising plural modules, said business layer (104) including business rules and a handheld terminal interactor module (130), said services layer (102) including a communications facility (144) for communicating with said handheld terminals (52) and also including a relational database (142); and
updating said data processing architecture (102, 104, 106) by substituting less than all of said modules thereof.

15. The method of claim 14 wherein further **characterized by** the step of localizing said software by using a language independence module (150).

16. The method of any of the preceding claims 14-15 further **characterized by** generating an audit trail with an audit engine (126).

17. The method of any of the preceding claims 14-16 further **characterized by** providing a user interface layer (106) that is separate and discrete from said business layer (104) and said services layer (102), users communicating with at least said business layer (104) exclusively through said user interface layer (106).

18. The method of any of the preceding claims 14-17 further **characterized by** providing business layer modules that are independent of said relational database (142).

19. The method of any of the preceding claims 14-18 further **characterized by** authenticating a user using said business layer (104).

20. The method of any of the preceding claims 14-19 further **characterized by** configuring an audit using an audit configuration manager module (124) within said business layer (104).
